# EUROPÄISCHE PATENTSCHRIFT

(11) **EP 4 544 138 B1**
(45) Veröffentlichungstag und Bekanntmachung des Hinweises auf die Patenterteilung: **02.12.2026**
(21) Anmeldenummer: 23730358.1
(22) Anmeldetag: 01.06.2023
(51) Int. Cl.: E05B 81/82

(54) **ELEKTRISCHES VERRIEGELUNGSSYSTEM FÜR KRAFTFAHRZEUGE MIT NOTVERSORGUNGSEINRICHTUNG**
ELECTRICAL LOCKING SYSTEM FOR MOTOR VEHICLES HAVING AN EMERGENCY SUPPLY DEVICE
SYSTÈME DE VERROUILLAGE ÉLECTRIQUE POUR VÉHICULES À MOTEUR AYANT UN DISPOSITIF D'ALIMENTATION D'URGENCE

(30) Priorität: 24.06.2022 DE 102022115827
(43) Veröffentlichungstag der Anmeldung: 30.04.2025
(73) Patentinhaber: Kiekert Aktiengesellschaft, 42579 Heiligenhaus (DE)
(72) Erfinder: BENDEL, Thorsten, 46149 Oberhausen (DE); INAN, Ömer, 46282 Dorsten (DE); KLOCKE, Tobias, 40822 Mettmann (DE)
(74) Vertreter: Kiekert AG Patentabteilung
(86) Internationale Anmeldenummer: PCT/DE2023/100411
(87) Internationale Veröffentlichungsnummer: WO 2023/246978

(56) Entgegenhaltungen:
- WO-A1-2019/086072
- DE-A1- 4 404 501
- US-A1- 2014 088 825

## Beschreibung

Die Erfindung betrifft ein elektrisches Verriegelungssystem für ein Kraftfahrzeug. Insbesondere betrifft die Erfindung ein elektrisches Verriegelungssystem mit einer Notversorgungseinrichtung mit zumindest einem Energiespeicher.

Aus dem Stand der Technik sind elektrische Türverriegelungssysteme für Türen von Kraftfahrzeug bekannt, die eine Mehrzahl von Schließeinrichtungen insbesondere elektrisch betätigbare Schlösser mit elektrisch beaufschlagbarem Aktuator umfassen. Solche elektrisch betätigbare Schlösser sind beispielsweise Kraftfahrzeugtürschlösser, welche nach einer etwaigen Entriegelung beispielsweise ein Gesperre elektromotorisch öffnen.

Die US 2014/0088825 A1 beschreibt ein elektrisches Verriegelungssystem für Fahrzeuge, bei dem jede Tür über eine eigene Schließvorrichtung mit einem elektrisch betätigten Aktuator verfügt. Zur Stromversorgung stehen eine Hauptstromquelle (z. B. Fahrzeugbatterie) und eine Notstromquelle (z. B. Zusatzbatterie) zur Verfügung. Diese beiden Stromquellen können über ein Schalterkonzept entweder einzeln oder gemeinsam in Serie geschaltet werden, um den Aktuator mit Energie zu versorgen - insbesondere bei Ausfall der Hauptquelle. Dabei handelt es sich jedoch ausschließlich um eine Verschaltung zwischen Haupt- und Notstromquelle, nicht um eine Verbindung mehrerer Notstromquellen untereinander. Die Notstromversorgung ist somit nicht dezentral vernetzt, sondern jeweils einer Tür zugeordnet und nur im Verhältnis zur Hauptquelle schaltbar. Der Kern der Erfindung liegt in der Umschaltung zwischen verschiedenen Versorgungsmodi zur Sicherstellung der Entriegelbarkeit.

Die WO 2019/086072 A1 offenbart ein elektrisches Verriegelungssystem für Kraftfahrzeuge, bei dem jede Schließvorrichtung über eine eigene Notversorgungseinrichtung mit einem Energiespeicher verfügt. Der Clou der Erfindung liegt darin, dass diese dezentralen Energiespeicher untereinander elektrisch verbunden sind - entweder parallel, seriell oder kombiniert - und durch eine Energieverwaltungseinheit überwacht und gesteuert werden. Dadurch wird eine höhere Ausfallsicherheit erreicht, da Energie zwischen den Speichern ausgetauscht und Spannungsabweichungen kompensiert werden können. Der Kern der Erfindung ist die koordinierte, vernetzte Notstromversorgung mehrerer Türschlösser zur Sicherstellung der Entriegelbarkeit im Notfall.

Bei einem elektrisch betätigbarem Schloss sorgt der elektrisch beaufschlagbare Aktuator respektive in der Regel ein Elektromotor meistens dafür, dass im Anschluss an ein Entriegelungs- bzw. Öffnungssignal beispielsweise die Sperrklinke von ihrem Eingriff mit der Drehfalle abgehoben wird. Das heißt, der Entriegelungs-/Öffnungsvorgang setzt eine funktionierende elektrische Energieversorgung des Elektromotors im Beispielfall voraus. Für den Fall, dass beispielsweise eine Kraftfahrzeugbatterie entladen ist oder sonst wie Funktionsbeeinträchtigungen auftreten, wird oftmals eine Notversorgungseinrichtung realisiert.

Diese Notversorgungseinrichtung stellt sicher, dass das elektrisch betätigbarem Schloss auch im Anschluss an den Ausfall oder der Funktionsbeeinträchtigung einer für ein übliches Öffnen vorgesehenen Stromquelle, funktionsbereit ist. Hierfür ist häufig ein Energiespeicher vorgesehen, der die erforderliche Spannung bereitstellt.

Mit Hilfe dieses Energiespeichers lässt sich der Aktuator im Zuge einer Notbetätigung beaufschlagen, und zwar wiederum zumindest zum Entriegeln/Öffnen der Kraftfahrzeugtür wie im Normalbetrieb. Im Normalbetrieb wird der Aktuator von einer Hauptstromquelle beispielsweise der Kraftfahrzeugbatterie gespeist. Fällt die Hauptstromquelle aus, so sorgt somit die Notversorgungseinrichtung alternativ dafür, dass die Kraftfahrzeugtür dennoch entriegelt/geöffnet werden kann.

Diese bekannten Notversorgungseinrichtungen weisen den Nachteil auf, dass einzelne Energiespeicher der Notversorgungseinrichtungen ausfallen können.

Ausgehend von dieser Situation ist es eine Aufgabe der vorliegenden Erfindung, ein elektrisches Verriegelungssystem für ein Kraftfahrzeug anzugeben, bei dem die Ausfallsicherheit der Schließvorrichtungen weiter erhöht ist.

Die Lösung der Aufgabe erfolgt durch die Merkmale des unabhängigen Anspruchs. Vorteilhafte Ausgestaltungen sind in den Unteransprüchen angegeben.

Demnach wird die Erfindung durch ein elektrisches Verriegelungssystem für ein Kraftfahrzeug gelöst, umfassend eine Mehrzahl von Schließvorrichtungen, insbesondere elektrisch betätigbare Schlösser, jeweils mit einem elektrisch beaufschlagbaren Aktuator zumindest zum Entriegeln und/oder Öffnen einer Kraftfahrzeugtür und/oder Kraftfahrzeugklappe, wobei jede Schließvorrichtung eine Notversorgungseinrichtung mit zumindest einem Energiespeicher umfasst, welcher eingerichtet ist, eine Spannungsversorgung der Schließvorrichtung zumindest zum Entriegeln und/oder Öffnen der Schließvorrichtung in einem durch einen vorbestimmten Notfall erzeugten Notbetrieb, insbesondere bei Ausfall einer Hauptstromquelle des Kraftfahrzeugs, bereitzustellen, in welchem insbesondere die einzelnen Energiespeicher der Notversorgungseinrichtungen unmittelbar elektrisch miteinander verbunden sind, wobei die Verbindung je nach gewünschter Spannungs- oder Kapazitätsanforderung entweder als Parallelschaltung oder als Serienschaltung ausgeführt ist.

Ein wesentlicher Punkt der Erfindung liegt darin, für jede Schließvorrichtung eine dezentrale Notversorgungseinrichtung mit einem Energiespeicher für die elektrische Freigabe und Ver-/Entriegelung von Türen eines Kraftfahrzeugs bereitzustellen, wobei zumindest die Energiespeicher der einzelnen Notversorgungseinrichtungen elektrisch miteinander verbunden sind.

Im Rahmen der Erfindung kann unter einer Kraftfahrzeugtür und/oder Kraftfahrzeugklappe eine Tür, Schiebetür, Klappe oder Heckklappe verstanden werden. Darunter fallen auch Klappen oder Türen im oder am Fahrzeug sowie Hauben, bspw. Motorhauben. Unter Klappen soll dabei auch bspw. ein Handschuhfach oder ein Staufach innerhalb des Fahrzeugs oder von außen zugängliche Staufächer verstanden werden.

Wird im Rahmen der Erfindung von einer Schließvorrichtung für ein Kraftfahrzeug gesprochen, so sind damit sämtliche elektrisch betätigbaren Schlösser umfasst, die ein bewegliches Teil in einer Position zum Kraftfahrzeug fixieren. Ein Schloss kann dabei beispielsweise in einer Seitentür, einer Schiebetür, einer Klappe oder einer Abdeckung angeordnet sein. Insbesondere eben überall dort, wo bewegliche Teile mittels einer Schließvorrichtung bestehend aus einem Gesperre und einer Drehfalle zum Einsatz kommen.

Erfindungsgemäß sind die einzelnen Energiespeicher elektrisch parallel miteinander verbunden oder elektrisch seriell miteinander verbunden. Die einzelnen Energiespeicher der Notversorgungseinrichtung können auf verschiedene Art und Weise miteinander verbunden werden. Die Parallelschaltung von zwei oder mehr Energiespeichern ist vorteilhaft, da hierdurch eine höhere Kapazität erzielt werden kann. Die serielle Verbindung von zwei oder mehr Energiespeichern ermöglicht es, eine höhere Spannung zu erzielen.

In einer weiteren technischen Ausführungsform des elektrischen Verriegelungssystems umfassen die Schließvorrichtungen ein Steuergerät, wobei die Notversorgungseinrichtungen mit dem Steuergerät verbunden sind. Hierdurch kann die Spannung der Energiespeicher von dem Steuergerät der Schließvorrichtung überwacht werden und bei Erkennung eines Spannungsabfalls oder eines Defektes ein entsprechendes Signal erzeugt werden. Beispielsweise kann eine Fehlermeldung in einem Display angezeigt werden, z.B. mit der Aufforderung eine Batterie zu wechseln. Durch die Überwachung kann beispielsweise auch ein Spannungsabfall durch Manipulation von außen erkannt werden.

In einer technisch vorteilhaften Ausführungsform des elektrischen Verriegelungssystems umfasst das elektrische Verriegelungssystem eine Energieverwaltungseinrichtung, wobei die Energieverwaltungseinrichtung derart eingerichtet ist, Abweichungen in der Spannungsversorgung der Schließvorrichtungen zu erkennen und/oder zu kompensieren. Mittels der Energieverwaltungseinrichtung können Schwankungen der Notstromversorgung in jeder Schließvorrichtung ausgeglichen werden.

In einer weiteren technischen Ausführungsform des elektrischen Verriegelungssystems sind zumindest die Energiespeicher der Notversorgungseinrichtungen von außerhalb des Kraftfahrzeugs zugänglich. Hierdurch können auf einfache Weise die Energiespeicher ausgetauscht werden.

In einer technisch vorteilhaften Ausführungsform des elektrischen Verriegelungssystems sind die Energiespeicher außenseitig an einer zugänglichen Stelle des Kraftfahrzeug in die Schließvorrichtungen einsetzbar. Dies hat den Vorteil, dass die Energiespeicher leicht ausgetauscht und ersetzt werden können.

In einer weiteren technischen Ausführungsform des elektrischen Verriegelungssystems umfassen die Notversorgungseinrichtungen zumindest ein Leuchtmittel als Warnfunktion und/oder als Zustandskontrolle für den Energiespeicher.

In einer technisch vorteilhaften Ausführungsform des elektrischen Verriegelungssystems sind die Energiespeicher weiter derart eingerichtet als Langzeitenergiequelle zum Entriegeln und/oder Öffnen der Schließvorrichtungen zu dienen. Die Energiespeicher können nicht nur in einem Notfall z.B. einen Unfall die Schließvorrichtungen mit der erforderlichen Energie versorgen, sondern auch dann, wenn beispielsweise das Kraftfahrzeug länger gestanden hat und die Hauptbatterie entladen sein sollte.

In einer weiteren technischen Ausführungsform des elektrischen Verriegelungssystems umfassen die Schließvorrichtungen einen Signalgeber zum Bereitstellen eines Entriegelungssignals bei Betätigung, wobei der Signalgeber eingerichtet ist, mittels des Energiespeichers mit Energie versorgt zu werden. Um die Funktion der Signalgeber aufrecht zu erhalten ist es vorteilhaft, dass auch die Signalgeber mit Energie von den Energiespeichern versorgt werden.

In einer technisch vorteilhaften Ausführungsform des elektrischen Verriegelungssystems umfassen die Steuergeräte der Schließvorrichtungen eine Weckfunktion, um den Energieverbrauch der Steuergeräte zu reduzieren.

In einer weiteren technischen Ausführungsform des elektrischen Verriegelungssystems sind die Energiespeicher elektrische Energiespeicher und/oder elektrochemische Energiespeicher. Zu den elektrischen Energiespeichern zählen z.B. Kondensatoren, die die elektrische Energie in einem elektrischen Feld speichern. Zu den elektrochemischen Energiespeichern zählen beispielsweise Batteriespeicher oder Akkumulatoren, die die elektrische Energie auf elektrochemischer Basis speichern.

Nachfolgend wird die Erfindung unter Bezugnahme auf die anliegenden Zeichnungen anhand eines bevorzugten Ausführungsbeispiels näher erläutert. Es gilt jedoch der Grundsatz, dass die Ausführungsbeispiele die Erfindung nicht beschränken, sondern lediglich Ausführungsformen darstellen. Die dargestellten Merkmale können einzeln oder in Kombination mit weiteren Merkmalen der Beschreibung wie auch den Patentansprüchen einzeln oder in Kombination ausgeführt werden.

Es zeigt:
- Fig. 1: eine schematische Ansicht einer Schließvorrichtung mit einer Notversorgungseinrichtung mit Energiespeicher gemäß einem Ausführungsbeispiel der Erfindung,
- Fig. 2: eine schematische Draufsicht auf ein Kraftfahrzeug mit einem elektrischen Verriegelungssystem mit einer Mehrzahl von Schließvorrichtungen gemäß einem weiteren Ausführungsbeispiel der Erfindung.

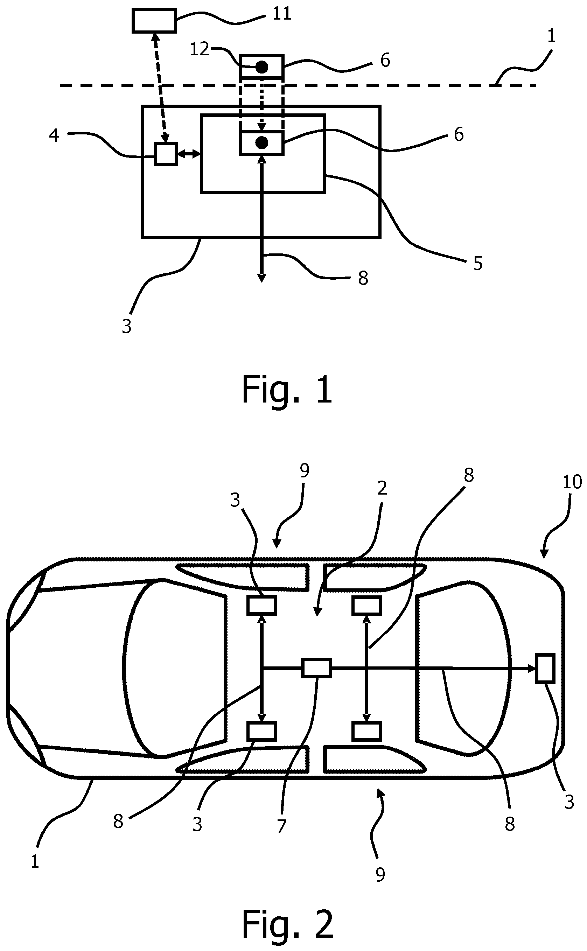

Fig. 1 zeigt eine schematische Ansicht einer Schließvorrichtung 3 mit einer Notversorgungseinrichtung 5 mit einem Energiespeicher 6 gemäß einem Ausführungsbeispiel der Erfindung. Die in Fig. 1 gezeigte Schließvorrichtung 3 ist Bestandteil eines elektrischen Verriegelungssystems 2 beispielsweise eines Kraftfahrzeugs 1. Das elektrische Verriegelungssystem 2 umfasst mehrere Schließvorrichtungen 3, wobei die Schließvorrichtungen 3 beispielweise in Kraftfahrzeugtüren 9 und/oder Kraftfahrzeugklappen 10 verbaut sind. Insbesondere wird unter dem Begriff Schließvorrichtung 3 ein elektrisch betätigbares Schloss verstanden. Solch ein betätigbares Schloss umfasst einen elektrisch beaufschlagbaren Aktuator, wobei der Aktuator zumindest zum Entriegeln und/oder Öffnen der Kraftfahrzeugtür 9 und/oder der Kraftfahrzeugklappe 10 eingerichtet ist. Jede der Schließvorrichtungen 3 umfasst ein Steuergerät 4 beispielsweise eine ECU ("electronic control unit") zur Steuerung der Schließvorrichtung 3. Des Weiteren umfasst jede Schließvorrichtung 3 eine Notversorgungseinrichtung 5 mit zumindest einem Energiespeicher 6. Die Notversorgungseinrichtung 5 dient dazu, den Aktuator mittels des Energiespeichers 6 auch bei einem Ausfall einer zentralen Stromversorgung, beispielsweise bei einem Ausfall der Kraftfahrzeugbatterie, mit Energie zu versorgen. Die einzelnen Energiespeicher 6 der Notversorgungseinrichtungen 5 sind dabei elektrisch miteinander verbunden 8. Als Energiespeicher 6 können beispielsweise elektrische Energiespeicher wie z.B. Kondensatoren und/oder elektrochemische Energiespeicher wie z.B. Batterien oder Akkumulatoren verwendet werden. In einem Ausführungsbeispiel sind die Energiespeicher 6 für die Notstromversorgung 5 direkt, beispielsweise von außen, zugänglich und bei Bedarf austauschbar. Beispielsweise können sich die Energiespeicher 6 hinter einer Abdeckung, im Bereich der Türstirnseite oder der Türinnenseite befinden. In einem Ausführungsbeispiel können die Energiespeicher 6 von außen direkt in die Schließvorrichtungen 3 eingesetzt werden. Dies wird in Fig. 1 durch die vertikalen gestrichelten Linien angedeutet. Auch kann es vorgesehen sein, dass die Energiespeicher 6 in eine mit dem Steuergerät 4 der Schließvorrichtung 3 verbundene Aufnahme beispielsweise in ein Batteriefach eingesetzt werden können.

In einem Ausführungsbeispiel können die Energiespeicher 6 beispielsweise auch hinter einer Säule der Kraftfahrzeugkarosserie angeordnet sein. Die Energieversorgung der Schließvorrichtung 3 erfolgt dann über einen Kontakt zwischen der Schließvorrichtung 3 und einem entsprechenden Schließvorrichtungshalter. Dies hat beispielsweise den Vorteil, dass eine geschlossene Tür 9 des Kraftfahrzeugs 1 sicher erkannt werden kann. Hierdurch kann die Funktionssicherheit des elektrischen Verriegelungssystems 2 verbessert werden.

In einem weiteren Ausführungsbeispiel können die Energiespeicher 6 mit einem Leuchtmittel 12 beispielsweise einer LED kombiniert werden. Die LED dient dabei als Warn- bzw. Signalleuchte und kann den Benutzer beispielsweise über den Zustand des Energiespeichers 6 informieren.

Die Steuergeräte 4 der Schließvorrichtungen können in einem weiteren Ausführungsbeispiel eine Weckfunktion umfassen, um den Energieverbrauch der Steuergeräte 4 zu reduzieren. Die Weckfunktion kann beispielsweise als separate elektronische Schaltung zum Wecken der Hauptsteuerung des Steuergeräts 4 ausgeführt sein. Hierdurch kann der Ruhestromverbrauch der Hauptsteuerung minimiert werden.

In einem weiteren Ausführungsbeispiel reagiert das Steuergerät 4 der Schließvorrichtung 3 auf einen Signalgeber 11 von außen. Der Signalgeber 11 dient dazu, dem Steuergerät 4 ein Signal beispielsweise, dass eine Tür 9 geöffnet werden soll, zu übermitteln. Als Signalgeber 11 können verschiedene Vorrichtungen wie z.B. Hall-Sensoren, kapazitive Sensoren, verschiedene Taster oder Schalter im Türgriff oder im Schloss vorgesehen sein. In dem zuvor beschriebenen Notfall können die Signalgeber 11 ebenfalls von dem Steuergerät 4 bzw. dem Energiespeicher 6 der Notversorgungseinrichtung 5 mit Energie versorgt werden.

Fig. 2 zeigt eine schematische Draufsicht eines Kraftfahrzeugs 1 mit einem elektrischen Verriegelungssystem 2 mit einer Mehrzahl von Schließvorrichtungen 3 gemäß einem weiteren Ausführungsbeispiel der Erfindung. Die Schließvorrichtungen 3 können beispielsweise elektrisch betätigbare Schlösser sein, die zum Entriegeln und/oder Öffnen einer Kraftfahrzeugtür 9 und/oder Kraftfahrzeugklappe 10 vorgesehen sind. Jede der Schließvorrichtungen 3 umfasst eine Notversorgungseinrichtung 5 mit einem Energiespeicher 6. In Fig. 2 ist weiter gezeigt, dass die Energiespeicher 6 der Notversorgungseinrichtungen 5 untereinander elektrisch verbunden sind 8. In einem Ausführungsbeispiel sind die Energiespeicher 6 parallel elektrisch miteinander verbunden, um so eine höhere Kapazität zu erzielen. In einem weiteren Ausführungsbeispiel sind die Energiespeicher 6 elektrisch seriell miteinander verbunden, wodurch sich die Spannung der Energiespeicher 6 erhöhen lässt.

Des Weiteren verfügt das in Fig. 2 gezeigte elektrische Verriegelungssystem 2 über eine Energieverwaltungseinrichtung 7. Die Energiespeicher 6 der einzelnen Notversorgungseinrichtungen 5 sind nicht nur untereinander miteinander verbunden, sondern auch in einem Ausführungsbeispiel der Erfindung mit der Energieverwaltungseinrichtung 7 verbunden. Die Energieverwaltungseinrichtung 7 ist dabei derart eingerichtet, Abweichungen in den Spannungen der Energiespeicher 6 zu erkennen und beispielsweise zu kompensieren, indem Energie von den nicht von der Abweichung betroffenen Energiespeicher 6 an den betroffenen Energiespeicher 6 übertragen wird.

Hierdurch wird auch bei einem Ausfall der Hauptstromversorgung eine noch höhere Ausfallsicherheit der einzelnen Schließvorrichtungen 3 erreicht.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Elektrisches Verriegelungssystem (2) für ein Kraftfahrzeug (1), umfassend
eine Mehrzahl von Schließvorrichtungen (3), insbesondere elektrisch betätigbare Schlösser, jeweils mit einem elektrisch beaufschlagbaren Aktuator zumindest zum Entriegeln und/oder Öffnen einer Kraftfahrzeugtür (9) und/oder Kraftfahrzeugklappe (10), wobei
jede Schließvorrichtung (3) eine Notversorgungseinrichtung (5) mit zumindest einem Energiespeicher (6) umfasst, welcher eingerichtet ist, eine Spannungsversorgung der Schließvorrichtung (3) zumindest zum Entriegeln und/oder Öffnen der Schließvorrichtung (3) in einem durch einen vorbestimmten Notfall erzeugten Notbetrieb, insbesondere bei Ausfall einer Hauptstromquelle des Kraftfahrzeugs (1), bereitzustellen,
**dadurch gekennzeichnet, dass**
die einzelnen Energiespeicher (6) der Notversorgungseinrichtungen (5) unmittelbar elektrisch miteinander verbunden sind, wobei die Verbindung je nach gewünschter Spannungs- oder Kapazitätsanforderung entweder als Parallelschaltung oder als Serienschaltung ausgeführt ist.

2. Elektrisches Verriegelungssystem (2) nach Anspruch 1, **dadurch gekennzeichnet, dass** die einzelnen Energiespeicher (6) elektrisch parallel miteinander verbunden sind oder elektrisch seriell miteinander verbunden sind.

3. Elektrisches Verriegelungssystem (2) nach einem der vorherigen Ansprüche, **dadurch gekennzeichnet, dass** die Schließvorrichtungen (3) ein Steuergerät (4) umfassen, wobei die Notversorgungseinrichtungen (5) mit dem Steuergerät (4) verbunden sind.

4. Elektrisches Verriegelungssystem (2) nach einem der vorherigen Ansprüche, **dadurch gekennzeichnet, dass** das elektrische Verriegelungssystem (2) eine Energieverwaltungseinrichtung (7) umfasst, derart eingerichtet Abweichungen in den Spannungen der Energiespeicher (6) zu erkennen und/oder zu kompensieren.

5. Elektrisches Verriegelungssystem (2) nach einem der vorherigen Ansprüche, **dadurch gekennzeichnet, dass** zumindest die Energiespeicher (6) der Notversorgungseinrichtungen (5) von außerhalb des Kraftfahrzeugs (1) zugänglich sind.

6. Elektrisches Verriegelungssystem (2) nach Anspruch 5, **dadurch gekennzeichnet, dass** die Energiespeicher (6) außenseitig an einer zugänglichen Stelle des Kraftfahrzeugs (1) in die Schließvorrichtungen (3) einsetzbar sind.

7. Elektrisches Verriegelungssystem (2) nach einem der vorherigen Ansprüche, **dadurch gekennzeichnet, dass** die Notversorgungseinrichtungen (5) zumindest ein Leuchtmittel (12) als Warnfunktion und/oder als Zustandskontrolle für den Energiespeicher (6) umfassen.

8. Elektrisches Verriegelungssystem (2) nach einem der vorherigen Ansprüche, **dadurch gekennzeichnet, dass** die Energiespeicher (5) weiter derart eingerichtet sind als Langzeitenergiequelle zum Entriegeln und/oder Öffnen der Schließvorrichtungen (3) zu dienen.

9. Elektrisches Verriegelungssystem (2) nach einem der vorherigen Ansprüche, **dadurch gekennzeichnet, dass** die Schließvorrichtungen (3) einen Signalgeber zum Bereitstellen eines Entriegelungssignals bei Betätigung umfassen, wobei der Signalgeber eingerichtet ist, mittels des Energiespeichers (5) mit Energie versorgt zu werden.

10. Elektrisches Verriegelungssystem (2) nach einem der vorherigen Ansprüche, **dadurch gekennzeichnet, dass** die Steuergeräte (4) der Schließvorrichtungen (3) eine Weckfunktion umfassen, um den Energieverbrauch der Steuergeräte (4) zu reduzieren.

11. Elektrisches Verriegelungssystem (2) nach einem der vorherigen Ansprüche, **dadurch gekennzeichnet, dass** die Energiespeicher (5) elektrische Energiespeicher und/oder elektrochemische Energiespeicher sind.

## Claims

1. Electrical locking system (2) for a motor vehicle (1), comprising
a plurality of lock devices (3), in particular locks which can be operated electrically, each having an actuator which can be supplied with electricity, at least for unlocking and/or opening a motor vehicle door (9) and/or motor vehicle flap (10), wherein
each lock device (3) comprises an emergency supply device (5) having at least one energy store (6), which is designed to provide a power supply to the lock device (3) at least for unlocking and/or opening the lock device (3) in an emergency operation caused by a predetermined emergency, in particular in the case of failure of a main power source of the motor vehicle (1),
**characterized in that**
the individual energy stores (6) of the emergency supply devices (5) are directly electrically connected to one another, wherein the connection is designed either as a parallel circuit or as a series circuit, depending on the desired voltage or capacity requirement.

2. Electrical locking system (2) according to claim 1, **characterized in that** the individual energy stores (6) are electrically connected to one another in parallel or are electrically connected to one another in series.

3. Electrical locking system (2) according to either of the preceding claims, **characterized in that** the lock devices (3) comprise a control apparatus (4), wherein the emergency supply devices (5) are connected to the control apparatus (4).

4. Electrical locking system (2) according to any of the preceding claims, **characterized in that** the electrical locking system (2) comprises a power management device (7) designed to detect and/or compensate for deviations in the voltages of the energy stores (6).

5. Electrical locking system (2) according to any of the preceding claims, **characterized in that** at least the energy stores (6) of the emergency supply devices (5) are accessible from outside the motor vehicle (1).

6. Electrical locking system (2) according to claim 5, **characterized in that** the energy stores (6) can be inserted into the lock devices (3) at an accessible point on the outside of the motor vehicle (1).

7. Electrical locking system (2) according to any of the preceding claims, **characterized in that** the emergency supply devices (5) comprise at least one lighting means (12) as a warning function and/or as a status indicator for the energy store (6).

8. Electrical locking system (2) according to any of the preceding claims, **characterized in that** the energy stores (5) are further designed to serve as a long-term energy source for unlocking and/or opening the lock devices (3).

9. Electrical locking system (2) according to any of the preceding claims, **characterized in that** the lock devices (3) comprise a signal transmitter for providing an unlocking signal upon operation, wherein the signal transmitter is designed to be supplied with energy by means of the energy store (5).

10. Electrical locking system (2) according to any of the preceding claims, **characterized in that** the control apparatuses (4) of the lock devices (3) comprise a wake-up function to reduce the energy consumption of the control apparatuses (4).

11. Electrical locking system (2) according to any of the preceding claims, **characterized in that** the energy stores (5) are electrical energy stores and/or electrochemical energy stores.

## Revendications

1. Système de verrouillage électrique (2) pour un véhicule automobile (1), comprenant
une pluralité de dispositifs de fermeture (3), en particulier de serrures pouvant être actionnées électriquement, comportant respectivement un actionneur pouvant être sollicité électriquement au moins pour le déverrouillage et/ou l'ouverture d'une porte de véhicule automobile (9) et/ou d'un élément de type clapet de véhicule automobile (10), dans lequel
chaque dispositif de fermeture (3) comprend un moyen d'alimentation de secours (5) comportant au moins un accumulateur d'énergie (6), lequel moyen d'alimentation de secours est configuré pour fournir une alimentation en tension du dispositif de fermeture (3) au moins pour le déverrouillage et/ou l'ouverture du dispositif de fermeture (3) dans un mode de fonctionnement de secours généré par un cas d'urgence prédéterminé, en particulier en cas de panne d'une source d'alimentation principale du véhicule automobile (1),
**caractérisé en ce que**
les différents accumulateurs d'énergie (6) des moyens d'alimentation de secours (5) sont directement connectés électriquement les uns aux autres, dans lequel la connexion est respectivement réalisée soit en tant que montage en parallèle, soit en tant que montage en série, en fonction de l'exigence de tension ou de capacité souhaitée.

2. Système de verrouillage électrique (2) selon la revendication 1, **caractérisé en ce que** les différents accumulateurs d'énergie (6) sont connectés électriquement en parallèle les uns aux autres ou sont connectés électriquement en série les uns aux autres.

3. Système de verrouillage électrique (2) selon l'une des revendications précédentes, **caractérisé en ce que** les dispositifs de fermeture (3) comprennent un appareil de commande (4), dans lequel les moyens d'alimentation de secours (5) sont connectés à l'appareil de commande (4).

4. Système de verrouillage électrique (2) selon l'une des revendications précédentes, **caractérisé en ce que** le système de verrouillage électrique (2) comprend un moyen de gestion d'énergie (7) qui est configuré pour détecter et/ou compenser des variations de tensions des accumulateurs d'énergie (6).

5. Système de verrouillage électrique (2) selon l'une des revendications précédentes, **caractérisé en ce qu'**au moins les accumulateurs d'énergie (6) des moyens d'alimentation de secours (5) sont accessibles depuis l'extérieur du véhicule automobile (1).

6. Système de verrouillage électrique (2) selon la revendication 5, **caractérisé en ce que** les accumulateurs d'énergie (6) peuvent être insérés dans les dispositifs de fermeture (3) côté extérieur, à un emplacement accessible du véhicule automobile (1).

7. Système de verrouillage électrique (2) selon l'une des revendications précédentes, **caractérisé en ce que** les moyens d'alimentation de secours (5) comprennent au moins un moyen lumineux (12) en tant que fonction d'avertissement et/ou en tant que moyen de contrôle d'état pour l'accumulateur d'énergie (6).

8. Système de verrouillage électrique (2) selon l'une des revendications précédentes, **caractérisé en ce que** les accumulateurs d'énergie (5) sont en outre configurés pour servir de source d'énergie de longue durée pour le déverrouillage et/ou l'ouverture des dispositifs de fermeture (3).

9. Système de verrouillage électrique (2) selon l'une des revendications précédentes, **caractérisé en ce que** les dispositifs de fermeture (3) comprennent un générateur de signaux pour la fourniture d'un signal de déverrouillage lors de l'actionnement, dans lequel le générateur de signaux est configuré pour être alimenté en énergie au moyen de l'accumulateur d'énergie (5).

10. Système de verrouillage électrique (2) selon l'une des revendications précédentes, **caractérisé en ce que** les appareils de commande (4) des dispositifs de fermeture (3) comprennent une fonction de réveil afin de réduire la consommation d'énergie des appareils de commande (4).

11. Système de verrouillage électrique (2) selon l'une des revendications précédentes, **caractérisé en ce que** les accumulateurs d'énergie (5) sont des accumulateurs d'énergie électrique et/ou des accumulateurs d'énergie électrochimique.
